# EUROPEAN PATENT SPECIFICATION

(11) **EP 2 845 414 B1**
(45) Date of publication and mention of the grant of the patent: **25.05.2016**
(21) Application number: 13726326.5
(22) Date of filing: 01.05.2013
(51) Int. Cl.: H04W 36/14, H04W 60/00

(54) **APPARATUS AND METHODS OF LIMITED TUNE AWAY**
VORRICHTUNG UND VERFAHREN FÜR BEGRENZTE ABSCHALTUNG
APPAREILS ET PROCÉDÉS DE CHANGEMENT D'ACCORD LIMITÉ

(30) Priority: 02.05.2012 US 201261641689 P; 15.03.2013 US 201313831765
(43) Date of publication of application: 11.03.2015
(73) Proprietor: Qualcomm Incorporated, San Diego, CA 92121 (US)
(72) Inventor: VISWANADHAM, Batchu, Bhaskara, San Diego, California 92121 (US); BOHRA, Aditya, San Diego, California 92121 (US); RAJURKAR, Anand, San Diego, California 92121 (US); BHAMIDIPATI, Krishna, San Diego, California 92121 (US)
(74) Representative: Dunlop, Hugh Christopher
(86) International application number: PCT/US2013/039023
(87) International publication number: WO 2013/166119

(56) References cited:
- WO-A1-2007/050923
- US-A1- 2006 176 870
- US-A1- 2011 217 969

## Description

### BACKGROUND

### Field

Aspects of the present disclosure relate generally to wireless communication systems, and more particularly to processing communications related to multiple subscriptions.

### Background

Wireless communication networks are widely deployed to provide various communication services such as telephony, video, data, messaging, broadcasts, and so on. Such networks, which are usually multiple access networks, support communications for multiple users by sharing the available network resources. One example of such a network is the UMTS Terrestrial Radio Access Network (UTRAN). The UTRAN is the radio access network (RAN) defined as a part of the Universal Mobile Telecommunications System (UMTS), a third generation (3G) mobile phone technology supported by the 3rd Generation Partnership Project (3GPP). The UMTS, which is the successor to Global System for Mobile Communications (GSM) technologies, currently supports various air interface standards, such as Wideband-Code Division Multiple Access (W-CDMA), Time Division-Code Division Multiple Access (TD-CDMA), and Time Division-Synchronous Code Division Multiple Access (TD-SCDMA). The UMTS also supports enhanced 3G data communications protocols, such as High Speed Packet Access (HSPA), which provides higher data transfer speeds and capacity to associated UMTS networks.

In some wireless networks, a user equipment (UE) can have multiple subscriptions to one or more networks (*e.g*., by employing multiple subscriber identity module (SIM) cards or otherwise). Such a UE may include, but is not limited to, a dual-SIM, dual standby (DSDS) device. For example, a first subscription may a first technology standard, such as Wideband Code Division Multiple Access (WCDMA), while a second subscription may support a second technology standard, such as Global System for Mobile Communications (GSM) Enhanced Data rates for GSM Evolution (EDGE) (also referred to as GERAN). Where the UE utilizes a single transceiver to communicate over the multiple subscriptions and/or networks, the UE can tune the transceiver to a given subscription and/or network during a given period of time to communicate therewith, but can only communicate in a single subscription and/or network at a given period of time. As such, when the UE has an active call with the first subscription, the UE may periodically tune away to the second subscription to monitor signals or acquire a connection. During such a tune away mode, the UE loses throughput on the active call with the first subscription due to the inability to receive signals corresponding to the first subscription. Further, if the tune away mode persists for a relatively long time, then the network managing the active call of the first subscription may determines that the UE is no longer connected due to lack of activity, and thus may terminate the active call of the first subscription.

Therefore, improvements in the operation of the tune away mode are desired.

### SUMMARY

In one aspect, a method of communicating with multiple subscriptions at a wireless device includes tuning away from an active call of a first subscription during a tune away mode to communicate using a second subscription. The method further includes performing a first tune away procedure using the second subscription during the tune away mode. Additionally, the method includes determining whether one or more additional tune away procedures are to be performed during the tune away mode using the second subscription subsequent to the performing of the first tune away procedure. Moreover, the method includes determining to limit performance of the one or more additional tune away procedures and ending the tune away mode and tuning back to using the first subscription for the active call based on the determination to limit the performance of the one or more additional tune away procedures.

In another aspect, a computer program product for communicating with multiple subscriptions comprising a computer-readable medium includes at least one instruction for causing a computer to tune away from an active call of a first subscription during a tune away mode to communicate using a second subscription. Also, the computer-readable medium includes at least one instruction for causing the computer to perform a first tune away procedure using the second subscription during the tune away mode. Further, the computer-readable medium includes at least one instruction for causing the computer to determine whether one or more additional tune away procedures are to be performed during the tune away mode using the second subscription subsequent to the performing of the first tune away procedure. Also, the computer-readable medium includes at least one instruction for causing the computer to determine to limit performance of the one or more additional tune away procedures and to end the tune away mode and tune back to using the first subscription for the active call based on the determination to limit the performance of the one or more additional tune away procedures.

In further aspects, an apparatus for communicating with multiple subscriptions includes means for tuning away from an active call of a first subscription during a tune away mode to communicate using a second subscription. Also, the apparatus includes means for performing a first tune away procedure using the second subscription during the tune away mode. Further, the apparatus includes means for determining whether one or more additional tune away procedures are to be performed during the tune away mode using the second subscription subsequent to the performing of the first tune away procedure. Moreover, the apparatus includes means for determining to limit performance of the one or more additional tune away procedures and means for ending the tune away mode and tuning back to using the first subscription for the active call based on the determination to limit the performance of the one or more additional tune away procedures.

Additional aspects provide a user equipment apparatus communicating with multiple subscriptions includes a processor configured to tune away from an active call of a first subscription during a tune away mode to communicate using a second subscription. Further, the processor may be configured to perform a first tune away procedure using the second subscription during the tune away mode. The processor may further be configured to determine whether one or more additional tune away procedures are to be performed during the tune away mode using the second subscription subsequent to the performing of the first tune away procedure. Moreover, the processor may be configured to determine to limit performance of the one or more additional tune away procedures and end the tune away mode and tune back to using the first subscription for the active call based on the determination to limit the performance of the one or more additional tune away procedures.

These and other aspects will become more fully understood upon a review of the detailed description, which follows.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
Fig. 1 is a schematic diagram of a communication network including an aspect of a user equipment configured for a limited tune away mode;
Fig. 2 is a schematic diagram of an aspect of the tune away limiter of Fig. 1;
Fig 3 is a schematic diagram of an aspect of the cell evaluation component of Fig. 2;
Fig. 4 is a chart representing one example of radio frequency communication resource utilization in the user equipment of Fig. 1;
Fig. 5 is a schematic diagram of an aspect of the user equipment of Fig. 1;
Fig. 6 is a flowchart of an aspect of a method of operating multiple subscriptions on a wireless device, such as the user equipment of Fig. 1;
Fig. 7 is a flowchart of an aspect of use case of operating radio frequency communication resources of a second subscription to achieve a limited tune away mode;
Fig. 8 is a flowchart of an aspect of use case of operating radio frequency communication resources of a second subscription to achieve a limited tune away mode; and
Fig. 9 is a schematic diagram of an aspect of a system for operating multiple subscriptions on a wireless device such as the user equipment of Fig. 1.

### DETAILED DESCRIPTION

Various aspects are now described with reference to the drawings. In the following description, for purposes of explanation, numerous specific details arc set forth in order to provide a thorough understanding of one or more aspects. It may be evident, however, that such aspect(s) may be practiced without these specific details.

The present aspects generally relate to processing communications associated with multiple subscriptions. In particular, issues arise in specific operation modes when a first technology type in an active communication session is required to pause and/or halt the session and relinquish resources to another technology type for processing purposes. Such a switch in technology modes and/or subscriptions may be considered, in some aspects, as a tune away. For example, the issues may arise in a dual SIM, dual standby operation mode when a first technology type (e.g., WCDMA) operates in an active communication (e.g., voice and/or data) session. In such a scenario, the first technology type may periodically be required to halt the ongoing session and relinquish resources (e.g., hardware resources) to a second technology type (e.g., GSM) for processing purposes (e.g., page demodulation). As a result, the foregoing could potentially lead to reduced throughput of the first technology type due to a lack of data transfer/communication during the paused/halted active session. For example, as the tune away time period increases, the throughput of the first communication decreases. Moreover, in some instances, the second technology type (e.g., GSM) may require and/or hold the relinquished resources for a prolonged time period in order to complete the desired procedures (e.g., reselections, registrations, etc.). However, holding the relinquished resources for a prolonged time period may substantially degrade throughput such that radio link failure occurs. Likewise, preventing the second technology type to perform the desired procedures may degrade second subscription communication services. Accordingly, in some aspects, the present apparatus and method may provide an efficient solution, as compared to current solutions, to adequately balance the procedures of plural technology types in order to optimize communication by limiting tune away procedures prior to failure of an active communication session.

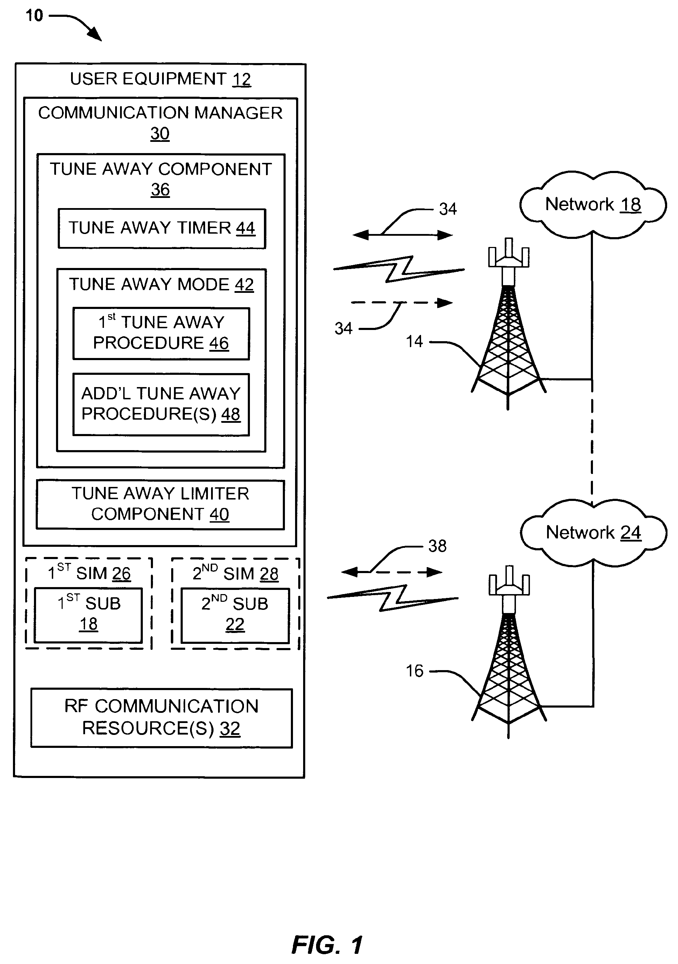

Referring to Fig. 1, in one aspect, a wireless communication system 10 includes a user equipment (UE) 12 for performing a limited tune away mode 42. For instance, UE 12 can communicate with a first base station 14 and/or a second base station 16 utilizing multiple subscriptions to one or more networks. In an example, UE 12 can have a first subscription 18 related to first network 20 and second subscription 22 related to the same network, such as first network 20, or to a different network, such as second network 24. For instance, each subscription 18 and 22 may relate to a different account and/or different services on the same network or on different networks. In some aspects, each subscription 18 and 22 optionally may be maintained on a respective first subscriber identity module (SIM) 26 and a second SIM 28. As such, in one aspect, UE 12 may be a multi-SIM, multi-standby device, such as a dual-SIM, dual standby (DSDS) device. Accordingly, UE 12 can at least communicate in first network 20 via a first base station 26 using first subscription 18. Moreover, UE 12 can communicate in second network 24 via first base station 26 and/or via a different base station, such as second base station 28, using second subscription 22. Further, first network 20 and second network 24 can use the same or different radio access technologies (RAT) to facilitate communicating with UEs. Additionally, first base station 26 and second base station 28 can each be a macrocell, picocell, femtocell, relay, Node B, mobile Node B, UE (e.g., communicating in peer-to-peer or ad-hoc mode with UE 12), or substantially any type of component that can communicate with UE 12 to provide wireless network access via a subscription at the UE 12.

UE 12 can include a communications manager component 30 configured to manage communication exchange signaling associated with first subscription 18 and/or second subscription 22 via one or more radio frequency (RF) communication resources 32. For example, communications manager component 30 may include and execute communication protocols and/or manage other standards-specific communication procedures using protocols and/or standards-specific instructions and/or subscription-specific configuration information that allows communications with first network 20 and second network 24. Further, RF communication resources 32 are configured to transmit and/or receive the communication exchange signaling to and/or from one or more base stations or other devices in wireless communication system 10. For example, RF communication resources 32 may include, but are not limited to, one or more of a transmitter, a receiver, a transceiver, protocol stacks, transmit chain components, and receive chain components. In some aspects, RF communication resources 32 may be dedicated to operate according to the standards and procedures of a single one of first subscription 18 or second subscription 22 at any given time. For instance, although not to be construed as limiting, RF communication resources 32 may be associated with a multi-SIM, multi-standby device, such as a dual-SIM, dual standby (DSDS) device.

In an aspect, communications manager component 30 may manage multi-network communication to enable mobility of UE 12, e.g. for cell reselection or handover, and/or to seek to add to or improve communication quality and/or services. In one case, for example, communications manager component 30 may establish an active call 34 using first subscription 18 with one network wireless network, for example first network 20, while attempting to acquire and/or maintain communication and/or service using second subscription 22 with the same network or with a different network, such as second network 24. According to an example, communications manager component 30 can establish active call 34 over first network 20, related to first subscription 18, via first base station 26. For instance, UE 12 and base station 26 can establish a connection to facilitate communicating in first network 20. Communications between UE 12 and first base station 26 can occur over logical channels, as described herein for example. UE 12 can activate the call based on requesting call establishment from base station 26, receiving a page for an incoming call from base station 26, ctc. Moreover, for example, active call 34 can be a data call (*e.g.,* voice over internet protocol (VoIP) or similar technologies) where the first network 20 is a packet-switched (PS) network, a voice call where first network 20 is a circuit-switched (CS) network, and/or the like.

Further, communication manager component 30 may also include a tune away component 36 configured to manage switching RF communication resources 32 from operating on active call 34 according to first subscription 18 to operating according to second subscription 22 to acquire and/or maintain communication and/or service with the same or with a different network. For example, tune away component 36 may maintain a periodic tune away timer 44 and, upon expiration of the tune away timer 44, is configured to change operation of RF communication resources 32 and trigger communications manager 30 to communicate according to second subscription 22. The execution of such a tune away, and the subsequent procedures, may be referred to as operating in the tune away mode 42. For instance, tune away component 36 causes RF communication resources 32 to switch or re-initialize an operating state, such as from a first subscription operating state (e.g., for a first network communication or service, like WCDMA communication) supporting active call 34 to a second subscription operating state (e.g., for a different first network service or for a different second network communication, like GSM communication). As such, initiating the tune away mode 42 may include, but is not limited to, one or more operations with respect to RF communication resources 32, such as performing a wake-up of the second subscription operating state, setting up a corresponding protocol stack for processing signals and data, enabling second subscription-related clocks, RF tuning including changing a receive and/or transmit frequency or frequency range of a transmitter or receiver or transceiver, and any other overhead procedure to enable communication using second subscription 22. Further, once the second subscription operating state is enabled, tune away component 36 can be configured to cause UE 12 and/or communication manager component 30 to perform, using second subscription 22, one or more procedures in the network, such as but not limited to page demodulation, idle mode monitoring procedures, periodic cell/location/routing updates, cell reselections, neighbor cell system information reading procedures, etc. Moreover, in an aspect, tune away component 36 may attempt to maintain UE 12 in the tune away mode 42 until all tune away procedures arc completed. In other words, in this case, a duration of the tune away mode 42 is undefined and not limited to a certain time.

In one example, tune away component 36 initiates tune away mode 42 to communicate with a network different than the network supporting active call 34, e.g. second network 24, via second base station 28. As such, tune away component 36 enables RF communication resources 32 to determine whether idle-mode signals are received during the tune away mode 42 from second base station 28 corresponding to second network 24. Idle-mode signals can relate to substantially any signal broadcast in the network, e.g. second network 24, such as paging signals, broadcast control channel (BCCII) signals, or other signals that can correlate to mobility of UE 12 or otherwise. As such, tune away component 36 enables UE 12 to perform at least a first procedure or a first set of procedures, including idle-mode procedures such as page demodulation. Additionally, depending on a state of communications and/or movement of UE 12 or whether idle-mode signals are received, tune away component 36 enables the device to perform additional procedures, such as but not limited to received signal processing (e.g. determining if a received page relates to second subscription 22 and optionally responding if so), periodic cell/location/routing updates, cell reselections, etc. These tune away procedures may be carried out in tune away communications 38 exchanged between UE 12 and a network entity corresponding to second subscription 22, such as second base station 16 and/or second network 24. It should be noted that such additional procedures may take a relatively long period of time, such as a period of time longer than an inactivity timer corresponding to active call 34 of first subscription 18. In some cases, for example when tune away component 36 attempts to maintain the tune away mode 42 for a long time period, such additional procedures may cause a radio link failure or termination of call 34, as the supporting network, e.g. first network 20 in this case, may believe that UE 12 is no longer in radio contact due to inactivity on active call 34.

Accordingly, in the present aspects, communication manager component 30 further includes a tune away limiter component 40 configured to control communications relating to both second subscription 22 and first subscription 18 in order to maintain and optimize throughput for active call 34 as well as to complete tune away-related procedures using second subscription 22. For example, tune away limiter component 40 may be useful in a dual-SIM, dual standby (DSDS) device. In particular, in an aspect, tune away limiter component 40 is configured to monitor the procedures occurring during the tune away mode 42, and override tune away component 36 in order to selectively trigger a tune back to active call 34 of first subscription 18. Specifically, tune away limiter component 40 is configured to limit the duration of the tune away mode 42 by deferring one or more tune away procedures when a current service cell for communications 38 of second subscription 22 is considered to be good enough to provide an effective radio link, or by setting a tune away time period limit, or a combination of both. For example, tune away limiter component 40 may be configured to consider the current serving cell sufficient based on an absolute serving cell parameter or a relative serving cell parameter value, e.g. as compared to a neighbour cell parameter. Such a serving (or neighbour) cell parameter may include, but is not limited to, one or more of a signal strength-related parameter, such as a received signal strength indicator (RSSI), signal-to-noise ratio (SNR), carrier-to-interference-and-noise ratio (CINR), reference signal received power (RSRP), reference signal received qualify (RSRQ), and/or similar measurements. As such, tune away limiter component 40 is able to maintain active call 34 and optimize throughput, for instance, by avoiding a radio link failure or other termination of active call 34 that may occur due to inactivity by UE 12. Moreover, tune away limiter component 40 is able to maintain active call 34 and optimize throughput while still achieving one or more tune away mode 42 goals, such as readying UE 12 for cell reselection and/or handover.

In other words, during the tune away mode 42, tune away limiter component 40 is configured to defer or halt tune away procedures and corresponding tune away communications 38 associated with second subscription 22, and switch RF communication resources 32 for operation according to the first subscription operating state in order to maintain active call 34. Additionally, tune away limiter component 40 manages continuation and completion of any unfinished additional tune away procedures when RF communication resources 32 are once again tuned away to operate according to the second subscription operating state, e.g. upon occurrence of the next tune away mode 42.

In an aspect, tune away limiter component 40 is configured to monitor or otherwise determine when certain tune away procedures have been completed, as well as when additional tune away procedures are to be performed. For example, tune away limiter component 40 may determine that a first tune away procedure 46, or a first set of procedures, have been performed during the tune away mode 42, and further that additional tune away procedures 48 are to be performed. Further, in some aspects, the UE operating according to the tune away procedures 46 and 48 defines the tune away mode 42. For instance, first tune away procedure 46 may include, but is not limited to, a signal demodulation procedure, such as listening for idle-mode signals or paging signals. Correspondingly, for instance, additional tune away procedures 48 may include, but are not limited to, one or more of a cell reselection procedure, a neighbor cell system information reading procedure, a registration procedure, a cell update procedure, a location update procedure, a routing update procedure, etc. Accordingly, upon detecting that additional tune away procedures 48 need to be performed, tune away limiter component 40 is configured to defer any respective tune way procedures until a next occurrence of the tune away mode 42 when the current serving cell is sufficient or when the current tune away mode 42 has already lasted a given duration of time. Alternatively, or in addition, tune away limiter component 40 is configured to return RF communication resources 32 to operating according to first subscription 18 when an out-of-service state is detected at any time during the tune away mode 42.

Additionally, it should be noted that tune away limiter component 40 may carry out the above functionality, e.g. limiting a duration of operating according to tune away mode 42 for second subscription 22, returning to operating according to first subscription 18, and then continuing at a later time any deferred additional tune away procedures 48, until all tune away procedures are completed.

Thus, UE 12 may execute communication manager component 30 and/or tune away limiter component 40 to selectively perform first tune away procedure 46 and additional tune away procedures 48 associated with second subscription 22 while maintaining active call 34 of first subscription 18 and optimizing corresponding throughput.

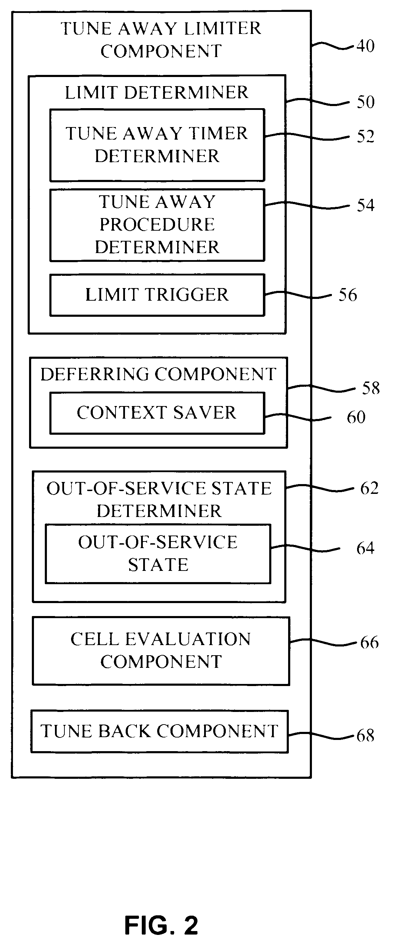

Referring to Fig. 2, in one aspect, the tune away limiter component 40 includes various sub-components configured to control communications relating to both the first subscription 18 and the second subscription 22. For example, the tune away limiter component 40 interacts with and/or includes various components that provide inputs to the tune away limiter component 40 to determine whether a tune away mode is to be limited. Such limitations may include, but not limited to, ending an ongoing tune away procedure of the second subscription 22 during tune away mode 42 and returning to an active call 34 of the first subscription 18. Furthermore, in an aspect, the tune away limiter component 40 may receive a limit trigger 56 to cause tuning back (e.g., via tune back component 68) to the first subscription based on determining that one or more additional tune away procedures 48 are to be performed, as determined by tune away procedure determiner 54.

In some cases, tune away limiter component 40 may tune back strictly based on determining that the one or more additional tune away procedures 48 are to be performed, while in other cases the tune away limiter component 40 may perform some part of the one or more additional tune away procedures 48 up to a tune away time limit. For example, in an aspect, tune away limiter component 40 may receive a limit trigger 56 based on expiration of a tune away timer 44 (Fig. 1), whose time period may be determined by a tune away timer determiner 52. In another aspect, tune away limiter component 40 may receive a limit trigger 56 based on determined serving cell parameters of a serving cell for the second subscription 22, as determined by a cell evaluation component 66. For example, the determined serving cell parameters may indicate whether a serving cell is sufficient and thereby requires no more searching, or is insufficient and/or out of service, thereby requiring additional searching. It should be noted that the tune away procedure determiner 54 may monitor or otherwise communication with the cell evaluation component 66, as the parameters relating to evaluation of the serving cell may affect the one or more additional tune away procedures 48 that are to be performed. Additionally, in an aspect when the limit trigger 56 is generated, tune away limiter component 40 may execute a deferring component 58 having a context saver 60 to store a current instance and/or state of the tune away procedures 46 and 48 before tuning back to the first subscription 18. Afterward, tune away limiter component 40 may execute tune back component 68 to cause communication manager 30 to tune back to the active call 34 of the first subscription 18.

For example, tune away limiter component 40 includes a limit determiner 50 configured to monitor and/or determine when to selectively trigger or tune back to the active call 34 of the first subscription. In other words, the limit determiner 50 may determine to limit performance of the one or more additional tune away procedures. In particular, limit determiner 50 includes a tune away timer determiner 52 configured to determine and/or set a tune away time period limit. For instance, the tune away timer determiner 52 determines a specific tune away time period limit for the tune away timer 44. For example, the tune away timer determiner 52 may determine the tune away time period limit based on a time-out period in the first network resulting from a failure to receive communication from the UE 12 in a given time period. Accordingly, the tune away timer determiner 52 may also program and/or set the tune away timer 44 with the determined tune away time period limit following such determination. For example, in some instances that should not be construed as limiting, the time period of the tune away timer 44 will vary from 60 ms to 120 ms. For instance, in an aspect, timer variance resulting from operation of limit determiner 50 may be based on the throughput of the one or more networks 18 and 22 (e.g., WCDMA).

Additionally, in some aspects, the time period may be based on a network timer and/or network timer period/duration of the first subscription 18. For example, the network timer effectively tracks the UE activity. In other words, if the network has not received communication from the UE after a certain period of time based on the network timer, it may assume the UE has lost the active call 34, and thus terminates the connection. Moreover, the tune away limiter component 40, via any one or more component therein, such as the limit determiner 50, may keep track of the tune away mode 42 period (e.g., how long it has been in the tune away mode 42), and determine what additional tune away procedures 48, if any, need to occur. As such, reference may be made to stored information on how long additional tune away procedures 48 typically take. Subsequently, the limit determiner 50 may reference a time-out timer of the first network and determine a time limit. For example, in a non-limiting case, the tune away limiter component 40 may detect and/or determine that the UE has been in tune away mode 42 for a first period of time (e.g., 10 ms), and that the time-out timer of the first network is a second period of time (e.g., 20 ms). After detecting when the next procedure will occur (e.g., 15 ms), the tune away limiter component 40 determines that it may tune back immediately or in approximately the difference of the first and second period of time (e.g., 10 ms), in order to avoid a time out and subsequent dropped call on the first subscription 18.

In a further aspect, tune away limiter 40 may include a tune away procedure determiner 54 configured to monitor and/or determine the first and additional procedure state, e.g. how much of a procedure is performed or remains to be performed and any data associated therewith. For example, tune away procedure determiner 54 may determine that first tune away procedure 46, or a first set of procedures, have been performed during the tune away mode 42, and further that additional tune away procedures 48 are to be performed. Tune away limiter component 40 may also include a limit trigger 56 configured to provide triggering (e.g., via notification) of when a current service cell for communications 38 of second subscription 22 is considered to be sufficient to provide an effective radio link, or by providing the timer period limit determined by the tune away timer determiner 52 to the tune away timer 44. Further, in an aspect, the limit trigger 56 may receive cell evaluation notifications and/or signals from the cell evaluation component 66, where the notifications or signals represent sufficient serving cell scenarios. In other instances, for example, the notifications or signals may represent insufficient serving cell scenarios calling for continued procedures. Limit trigger 56 may also communicate with the tune back component 68 to trigger or selectively notify the tune back component 68 when to tune back to the active call 34 of the first subscription 18. For instance, tune back component 68 may signal an end to the tune away mode 42 and tune back to the first subscription based on the determination to limit the performance of the one or more additional tune away procedures 48.

Additionally, tune away limiter components 40 may include a deferring component 58 configured to defer performance of any tune away procedures until occurrence of a subsequent tune away mode 42, e.g., based on the sufficiency of the current serving cell or when the current tune away mode 42 has expired. Upon such a determination to defer performance of the tune away procedures, which may include the additional tune away procedures 48, the deferring component 58 may, by way of the context saver 60, save the tune away performance context. For example, the context saver 60 may save, in a storage device, the instance representing the state at which the tune away procedure(s) were halted. In other words, in this case, only a portion of the additional tune away procedures 48 may have been performed at the end of a tune away mode 42. During a subsequent tune away mode 42, the context saver 60 may provide the saved context to any of the components (e.g., tune away component 36) such that tune away procedures may re-commence at the instance and in the state at which the tune away procedures were previously deferred. Moreover, the deferring component 58 may defer any one or more of a plurality of procedures, or any portion thereof, including, but not limited to, cell reselection procedures, neighbor cell system information reading procedures, registration procedures, cell update procedures, location update procedures, and routing update procedures.

In a further aspect, tune away limiter component 40 may include an out-of-service state determiner 62 configured to determine an out-of-service state 64 during the tune away mode 42. For example, the out-of-service state determiner 62 performs or otherwise provides notification to the tune back component 68 the out-of-service state such that the tune back component 68 ends the tune away mode 42 and tunes back to the first subscription 18. For example, the out-of-service determiner 62 can monitor whether the UE 12 has detected and established communication with the network via base station (e.g., via base station 14 or 16). If UE 12 has searched yet failed to establish network communication after a given period of time, then the out-of-service determiner 62 may determine that the UE 12 is in an out-of-service state.

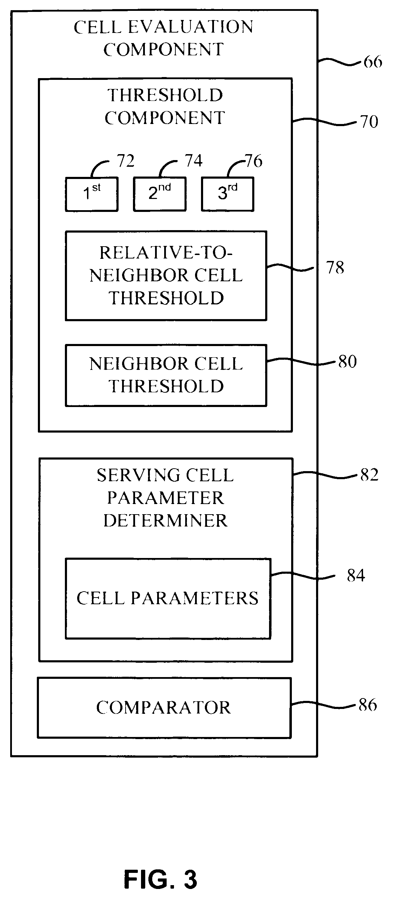

Referring to Fig. 3, a further aspect of the cell evaluation component 66 (Fig. 2) is provided. The cell evaluation component 66 may be configured to provide cell evaluation information to any one or more of the components of the tune away limiter component 40 and/or the communications manager 30. For instance, the cell evaluation component 66 may provide the deferring component 58 with cell evaluation information so as to indicate to the deferring component 58 when to defer performance of tune away procedures and/or when to perform additional tune away procedures 48. In order to make such determinations, the cell evaluation component 66 may include a threshold component 70 configured to determine and/or store various thresholds used for comparing purposes as will described below. The threshold component 70 may include a first threshold 72 that represents a first set of values of a serving cell parameter that corresponds to an effective radio communication link. Further, the threshold component 70 may include a second threshold 74 that represents a second set of values of the serving cell parameter that corresponds to a substantially effective radio communication link. Moreover, the threshold component 70 may include a third threshold 76 that represents a third set of values of the serving cell parameter that corresponds to a substantially ineffective radio communication link. Additionally, the threshold component 70 may be configured to determine and/or store additional thresholds representing a set of values of the serving cell parameter that corresponds to a substantially effective and/or ineffective radio communication link.

In further aspects, threshold component 70 may include a relative-to-neighbor cell threshold 78 that represents a sct of relative values of the serving cell parameter as compared to a corresponding neighbor cell parameter 82. For instance, the relative-to-neighbor threshold 78 may indicate a relatively stronger or weaker serving cell.

Additionally, cell evaluation component 66 may include a serving cell parameter determiner 82 configured to determine at least one serving cell parameter corresponding to communication using the second subscription 22 in the tune away mode 42. In other words, serving cell parameter determiner 82 is configured to determine and store one or more serving cell parameters 84. The at least one determined serving cell parameter may subsequently be stored as cell parameters 84. Also, the serving cell parameter(s) may include, among other aspects, a serving cell power level-related parameter. Furthermore, a multitude of cell parameters 84 may be stored in serving cell parameter determiner 82 for cell evaluation purposes. In some aspects, the cell parameters 84 and the thresholds of threshold component 70 may be provided to the comparator 86 to determine when to defer and/or perform the additional tune away procedures 48. For instance, comparator 86 may compare the serving cell parameter to one or more of a first, second and/or third threshold and provide the results to any one or more components or subcomponents of the communications manager 30.

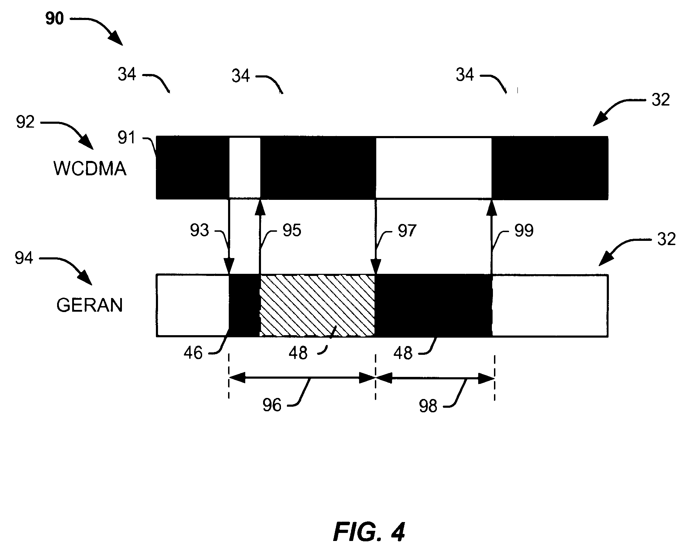

Referring to Fig. 4, one example of how the present apparatus and methods operate to limit tune away includes an RF communication resource utilization chart 90, which represents use of RF communication resources 32 (Fig. 1). In particular, RF communication resources 32 include a first subscription configuration 92 corresponding to first subscription 18 (Fig. 1), such as for WCDMA communications, and a second subscription configuration 94 corresponding to second subscription 22 (Fig. 1), such as for GERAN communications. Further, in chart 90, the shaded areas represent use states, while the non-shaded areas represent non-use and/or sleep states, and the crosshatched area represents a detected but not performed additional tune away procedure 48.

Initially, at 91, RF communication resources 32 are in use in first subscription configuration 92 to support active call 34, such as a data session. Also, during this time, second subscription configuration 94 is not in use, e.g. in a sleep state. Subsequently, at 93, the use of RF communication resources 32 are transferred to second subscription configuration 94, for example, to perform one or more initial tune away procedures, such as first tune away procedure 46 including a wake-up and a page demodulation. This transition may be triggered by tune away component 36 (Fig. 1), for example, based on arrival of a periodic tune away time. Next, at 95, after performing first tune away procedure 46 and upon determining that additional tune away procedures 48 are to be performed, use of RF communication resources 32 are transferred back to first subscription configuration 94. For example, the transfer of resources at 95 is based on a determination that a serving cell parameter of the serving cell for second subscription communications is good enough to have an effective radio communication link, either based on the absolute value of the parameter and/or based on a relative value of the parameter compared to a corresponding parameter of a neighbor base station (e.g. a reselection or handover candidate). Accordingly, at 95, the present apparatus and methods determine to defer the performance of one or more additional tune away procedures 48, for example, until a next tune away mode 42 based on a tune away mode periodicity 96.

Further, at 97, upon occurrence of the next tune away mode 42, the use of RF communication resources 32 are returned to second subscription configuration 94, for example, to continue performing one or more additional tune away procedures 48. As such, the use of RF communication resources 32 according to second subscription configuration 94 may continue until, for example, expiration of a tune away time period 98, which causes another tune back to operation of RF communication resources 32 according to first subscription configuration 92.

The present apparatus and methods can continue to perform periodic limited tune away modes 42 as described above until completion of all additional tune away procedures 48 (which, in one alternative, may occur at 97). As such, the use of RF communication resources 32 during the tune away mode 42 is complete, and RF communication resources 32 are returned to first subscription configuration 94, for example, to resume active call 34.

It should be understood that chart 50 represents but one example of many possible different implementations of tune away limiter component 40 in controlling the use of RF communication resources 32, as described herein.

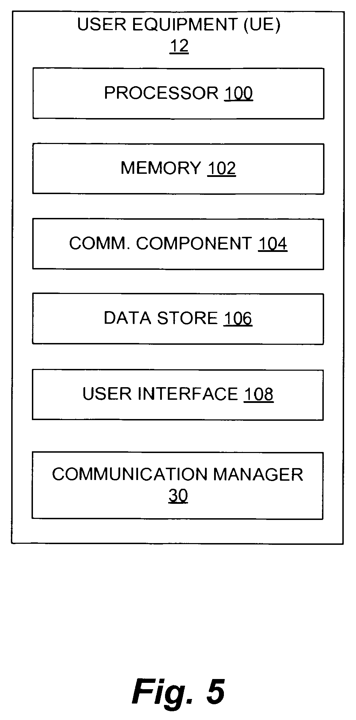

Referring to Fig. 5, in one aspect, UE 12 may include a specially programmed or configured computer device. UE 12 includes a processor 100 for carrying out processing functions associated with one or more of components and functions described herein. Processor 100 can include a single or multiple set of processors or multi-core processors. Moreover, processor 100 can be implemented as an integrated processing system and/or a distributed processing system. Additionally, processor 100 may be configured to perform the functions described herein related to a limited tune away mode 42.

UE 12 further includes a memory 102, such as for storing data used herein and/or local versions of applications being executed by processor 100. Memory 102 can include any type of memory usable by a computer, such as random access memory (RAM), read only memory (ROM), tapes, magnetic discs, optical discs, volatile memory, non-volatile memory, and any combination thereof. Additionally, memory 102 may be configured to store data and/or code or computer-readable instructions for performing the functions described herein related to a limited tune away mode 42.

Further, UE 12 includes a communications component 104 that provides for establishing and maintaining communications with one or more entities utilizing one or more of hardware, software, and services as described herein. Communications component 104 may carry communication signals between components on UE 12, as well as exchanging communication signals between UE 12 and external devices, such as devices located across a wired or wireless communications network and/or devices serially or locally connected to UE 12. For example, communications component 104 may include one or more buses, and may further include transmit chain components and receive chain components associated with a transmitter and receiver, respectively, or a transceiver, operable for interfacing with external devices. In an additional aspect, communications component 104 may be configured to perform the functions described herein related to a limited tune away mode 42.

Additionally, UE 12 may further include a data store 106, which can be any suitable combination of hardware and/or software, that provides for mass storage of information, databases, and programs employed in connection with aspects described herein. For example, data store 106 may be a data repository for applications and data not currently being executed by processor 100, such as those related to the aspect described herein.

UE 12 may additionally include a user interface component 108 operable to receive inputs from a user of UE 12, and further operable to generate outputs for presentation to the user. User interface component 108 may include one or more input devices, including but not limited to a keyboard, a number pad, a mouse, a touch-sensitive display, a navigation key, a function key, a microphone, a voice recognition component, any other mechanism capable of receiving an input from a user, or any combination thereof. Further, user interface component 108 may include one or more output devices, including but not limited to a display, a speaker, a haptic feedback mechanism, a printer, any other mechanism capable of presenting an output to a user, or any combination thereof.

Additionally, UE 12 may include communication manager component 30, as described with respect to Fig. 1 for enabling a limited tune away mode 42, such as in specially programmed computer readable instructions or code, firmware, hardware, one or more processor modules, or some combination thereof.

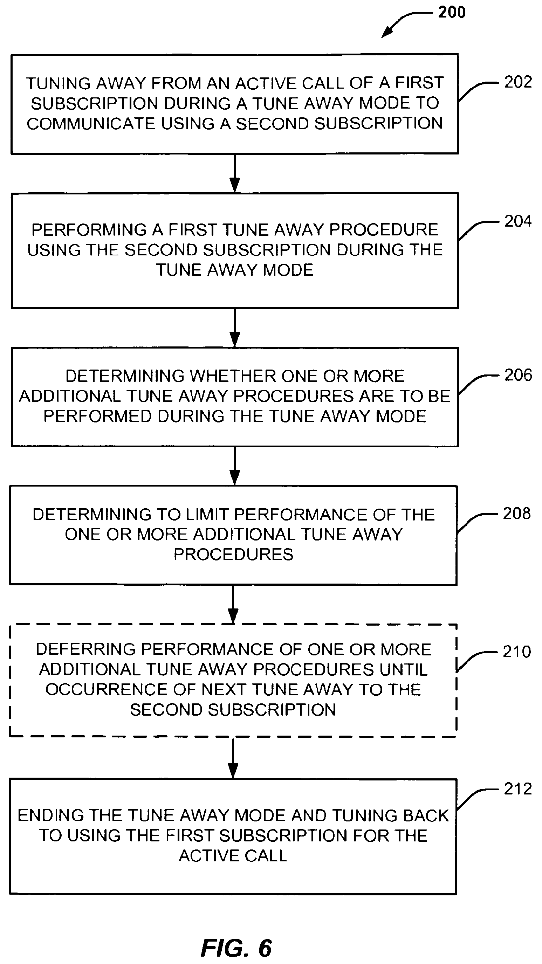

Referring to Fig. 6, in operation, a UE such as UE 12 (Fig. 1) may perform one aspect of a method 200 for communicating with multiple subscriptions, including a limited tune away mode 42. While, for purposes of simplicity of explanation, the method is shown and described as a series of acts, it is to be understood and appreciated that the method is not limited by the order of acts, as some acts may, in accordance with one or more embodiments, occur in different orders and/or concurrently with other acts from that shown and described herein. For example, it is to be appreciated that a method could alternatively be represented as a series of interrelated states or events, such as in a state diagram. Moreover, not all illustrated acts may be required to implement a method in accordance with one or more features described herein.

In an aspect, at block 202, the method 200 includes tuning away from an active call of a first subscription during a tune away mode to communicate using a second subscription. For example, as described above, communication manager 30 (Fig. 1) may execute tune away component 36 to tune away from an active call 34 of a first subscription 18 during a tune away mode 42.

At block 204, the method 200 includes performing a first tune away procedure using the second subscription during the tune away mode. For instance, as described above, communication manager 30 (Fig. 1) may execute first tune away procedure component 46 to perform first tune away procedure(s).

At block 206, the method 200 includes determining whether one or more additional tune away procedures are to be performed during the tune away mode using the second subscription subsequent to the performing of the first tune away procedure. For instance, the foregoing communication manager 30 (Fig. 1) may be configured to execute tune away limiter component 40 (Figs. 1 & 2) to determine whether additional tune away procedures 48 are to be performed.

At block 208, the method 200 includes determining to limit performance of the one or more additional tune away procedures. For example, as described above, the communication manager 30 (Fig. 1) may execute the tune away limiter component 40 to determine whether to limit additional tune away procedure 48 performance.

At block 210, the method 200 may include deferring performance of one or more additional tune away procedures until occurrence of a next tune away to the second subscription, based on a tune away periodicity of the tune away mode, in response to the determination to limit performance during the tune away mode. For example, as described above, the communication manager 30 (Fig. 1) may execute the tune away limiter 40 (Figs. 1 & 2), which in turn may execute the deferring component 58 to defer performance of the additional procedures 48 until occurrence of a next tune away (e.g., tune away mode 42). In further aspects, deferring may result as a result of additional determined conditions including, but not limited to, strictly detecting additional procedures 48, the tune away timer 44 expiring, at least one second subserving cell condition (e.g., out-of-service).

In some aspects, deferring performance during the tune away mode further includes determining a serving cell parameter corresponding to communication using the second subscription in the tune away mode. Subsequently, a comparison may be made using the serving cell parameter to one or more of: a first threshold that represents a first set of values of the serving cell parameter that corresponds to an effective radio communication link; a second threshold that represents a second set of values of the serving cell parameter that corresponds to a substantially effective radio communication link; and a third threshold that represents a third set of values of the serving cell parameter that corresponds to a substantially ineffective radio communication link. Afterwards, a determination is made whether to perform the additional tune away procedures or to defer. The user equipment may perform the deferring when: the determined serving cell parameter meets the first threshold, or the determined serving cell parameter meets the first threshold and meets a relative-to-neighbor cell threshold that represents a set of relative values, of the serving cell parameter as compared to a corresponding neighbor cell parameter, wherein the relative-to-neighbor threshold indicates a relatively stronger serving cell. However, the user equipment may perform at least one of the one or more additional tune away procedures when the determined serving cell parameter meets the third threshold. Further, the communication manager 30 (Fig. 1), may be configured to execute the tune away limiter component 40 and various subcomponents thereof to carry out the foregoing functions.

And, at block 212, the method 200 includes ending the tune away mode and tuning back to using the first subscription for the active call based on the determination to limit the performance of the one or more additional tune away procedures. For instance, as described above, the communication manager 30 (Fig. 1) may execute the tune away limiter 40 (Figs. 1 & 2) to end the tune away mode 42 and subsequently tune back component 68 (Fig. 2) to tune back to using the first subscription 18 for the active call 34.

According to method 200, in one aspect, UE 12 may switch RF communication resources between different subscriptions in a manner that limits a duration of the tune away mode 42. Moreover, it should be noted that method 200 may be carried out by execution of communications manager 30, or one or more components thereof, such as tune away component 36 and tune away limiter component 40.

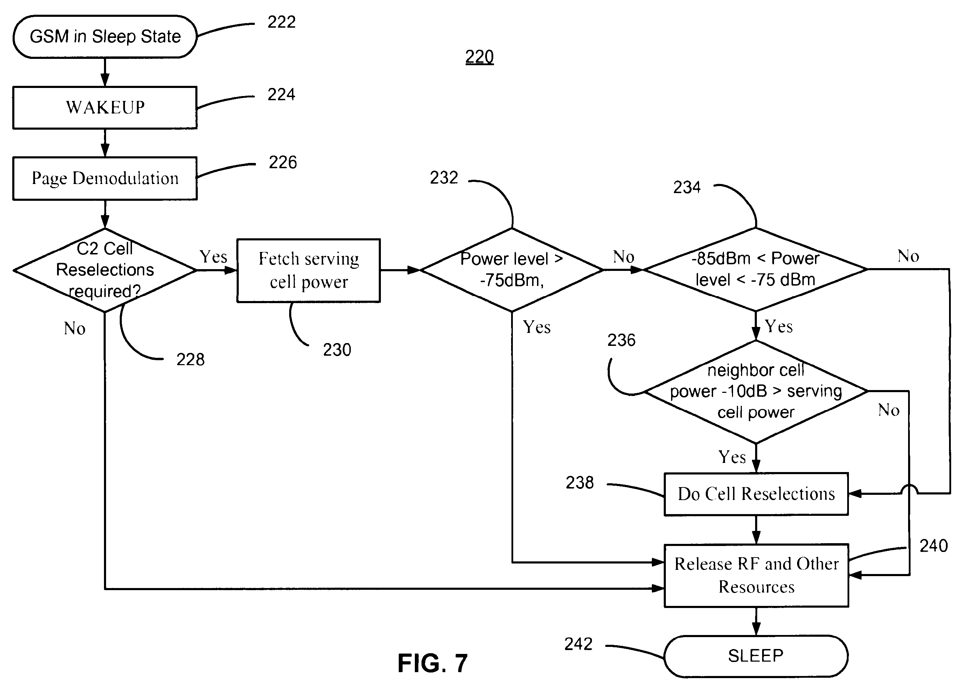

Referring to Fig. 7, in one use case where tune away procedures are deferred, a method 220 of operating RF communication resources in a second subscription configuration, e.g. a GSM or GERAN configuration, to perform a limited tune away mode starts at block 222 with the second subscription configuration of the RF communication resources in a sleep mode.

As a result of the UE transitioning to a tune away mode operation, one or more first tune away procedures are performed, in this case respectively including a wake up procedure at block 224 and a page demodulation procedure at block 226. For example, the communication manager 30 (Fig. 1) may execute the tune away component 36 to perform first tune away procedures 46.

Next, at block 228, a determination is made as to whether or not the RF communication resources are to be kept for a longer duration, for example, to complete one or more additional tune away procedures. For example, the communication manager 30 (Fig. 1) may execute the tune away limiter component 40 to determine whether the communication resources 32 are to complete one or more additional tune away procedures 48. Such, additional tune away procedures may include, but are not limited to, a cell reselection procedure, a neighbor cell system information reading procedure, a registration procedure, a cell update procedure, a location update procedure, a routing update procedure, etc.

If no additional tune away procedures are pending, then the RF communication resources and any other corresponding or related resources are released at block 240 and the second subscription configuration is returned to a non-active state, such as a sleep state at block 242. For example, the user equipment 12 (Fig. 1) may execute any one or more components or subcomponents to release communication resources 32 and return to a non-active state.

If additional tune away procedures are to be performed, then in one aspect a serving cell parameter is determined at block 230. For example, the serving cell power of the second subscription 22 is evaluated to determine whether it is sufficient enough on its own, or relative to a neighbor cell, to be maintained as the serving cell or whether a reselection should be performed. Further, in some aspects, the serving cell parameters can be a serving cell power level, such as a received signal strength. Further, in an aspect, the communication manager 30 (Fig. 1) may execute tune away limiter component 40 to determine a serving cell parameter.

At block 232, the received serving cell parameter is then compared to a first threshold that represents an effective communication link being provided by the serving cell. For example, in one aspect, the determined serving cell power level is compared to a threshold value, such as but not limited to -75 dBm in this example, to evaluate if the determined serving cell power level is greater than the first threshold. Moreover, in some aspects, the communication manager 30 (Fig. 1) may execute the tune away limiter component 40, which in turn enables the various components thereof, such as the cell evaluation component to compare the received serving cell parameter to a first threshold.

If the determined serving cell power level is greater than the first threshold, then the RF communication resources and any other corresponding or related resources are released at block 240 and the second subscription configuration is returned to a non-active state, such as a sleep state at block 242.

If the determined serving cell power level is not greater than the first threshold, then at block 234, it is compared to a second set of thresholds that represents a moderately effective communication link being provided by the serving cell. In some cases, the second set of thresholds may be a high and low threshold. For example, in one aspect, the determined serving cell power level is compared to a set of threshold values, such as but not limited to being between -85 dBm and -75 dBm in this example, to evaluate if the determined serving cell power level is greater than the second threshold. In some aspects, the communication manager 30 (Fig. 1) may execute the tune away limiter component 40, which in turn enables the various components thereof, such as the cell evaluation component to compare the received serving cell parameter to a second threshold(s).

If the determined serving cell parameter is less than or otherwise fails to achieve the second threshold, then one or more additional tune away procedures may be performed at block 238. In this example, a cell reselection may be performed. For instance, the communication manager 30 (Fig. 1) may execute the tune away component 36 to perform the additional tune away procedures 48. After performing the one or more additional procedures, the RF communication resources and any other corresponding or related resources are released at block 240 and the second subscription configuration is returned to a non-active state, such as a sleep state at block 242.

If the determined serving cell parameter meets the second threshold, then at block 236, a determination is made as to whether the determined serving cell parameter meets a relative threshold. For instance, relative threshold can be a relative-to-neighbor cell threshold that represents a set of relative values of the serving cell parameter as compared to a corresponding neighbor cell parameter, wherein the relative-to-neighbor threshold indicates a relatively stronger serving cell. In this case, the relative threshold is a condition where the neighbor cell parameter, e.g. the power level, is 10 dBm greater than the serving cell power level. In another example, where the additional tune away procedure is a neighbor cell system information reading, e.g. reading a cell broadcast common channel (CELL BCCH), the relative threshold is a condition where the neighbor cell power level is 20 dB more than serving cell. For instance, the communication manager 30 (Fig. 1) may execute the tune away limiter component 40, which in turn enables the various components thereof, such as the cell evaluation component to compare the received serving cell parameter to a relative threshold. In some aspects, the relative threshold may be considered the same as the third threshold.

If the neighbor cell power level is 10 dBm greater than the serving cell power, in this example, then one or more additional procedures, such as cell reselection, are performed at block 238. Similarly, in another case, if the neighbor cell power level is 20 dB greater than the serving cell power, then one or more additional procedures, such as reading a cell broadcast common channel (CELL BCCH), are performed at block 238. As such, it is noted that different ones of the additional tune away procedures may correspond to different thresholds, including either the absolute thresholds or the relative thresholds. Then, the RF communication resources and any other corresponding or related resources are released at block 240 and the second subscription configuration is returned to a non-active state, such as a sleep state at block 242.

If the neighbor cell power level is not 10 dBm greater than the serving cell power level, then the tune away procedure can be deferred, and thus the RF communication resources and any other corresponding or related resources are released at block 240 and the second subscription configuration is returned to a non-active state, such as a sleep state at block 242.

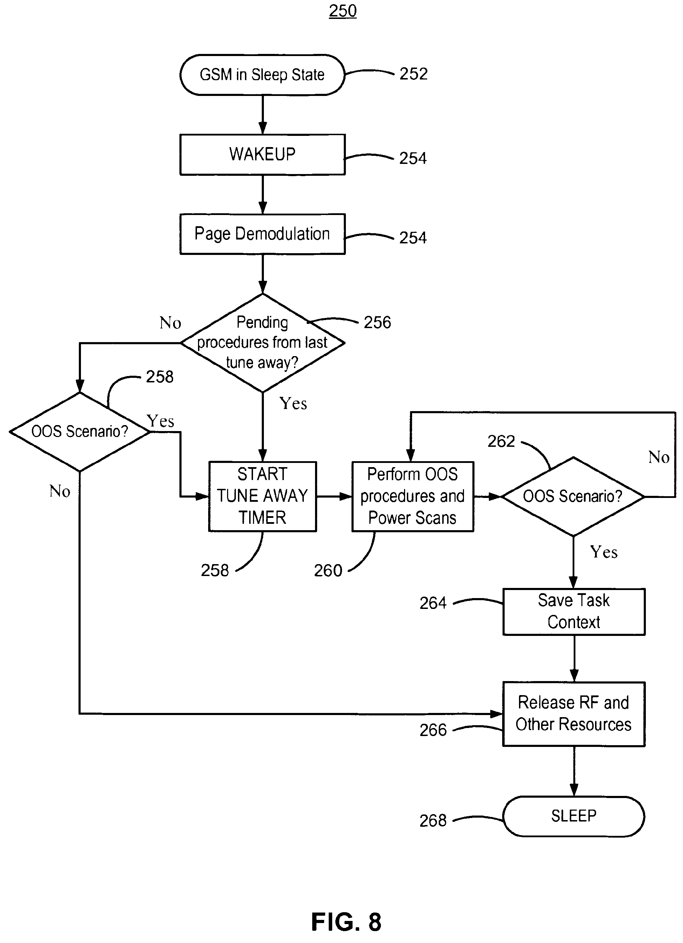

Referring to Fig. 8, in another use case wherein tune away time is limited, a method 250 of operating RF communication resources in a second subscription configuration, e.g. a GSM or GERAN configuration, to perform a limited tune away mode starts with the second subscription configuration of the RF communication resources in a sleep mode at block 252.

As a result of the UE transitioning to a tune away mode operation, one or more first tune away procedures are performed, in this case respectively including a wake up procedure at block 254 and a page demodulation procedure at block 254. For example, the communication manager 30 (Fig. 1) may execute the tune away component 36 to perform first tune away procedures 46.

Next, at block 256, a determination is made as to whether or not the RF communication resources are to be kept for a longer duration, for example, to complete one or more additional tune away procedures. For example, the communication manager 30 (Fig. 1) may execute the tune away limiter component 40 to determine whether the communication resources 32 are to complete one or more additional tune away procedures 48. Such, additional tune away procedures may include, but are not limited to, a cell reselection procedure, a neighbor cell system information reading procedure, a registration procedure, a cell update procedure, a location update procedure, a routing update procedure, etc.

If no additional tune away procedures are pending, then a determination is made as to whether an out-of-service state exists at block 258. For example, the tune away limiter component 40 (Fig. 2) may be configured to execute the out-of-service state determiner 62 to determine whether an out-of-service state exists. If not, then the RF communication resources and any other corresponding or related resources are released at block 266 and the second subscription configuration is returned to a non-active state, such as a sleep state at block 268.

However, if additional tune away procedures are to be performed, or if an out-of-service state exists, then a tune away timer is started at block 258, wherein the tune away timer expires upon a defined length of time, which may correspond to a time remaining before an inactivity timer for active call 34 (Fig. 1) of first subscription 18 (Fig. 1) expires. For example, the tune away component 36 (Fig. 1) may be configured to execute the tune away timer 44 to provide a defined duration in which the tune away procedures may be performed.

Then, at block 260, one or more additional tune away procedures may be performed. In some aspects, the communication manager 30 (Fig. 1) may be configured to execute the tune away component 36 to perform additional tune away procedures. For instance, in this example, these procedures include performing one or more of out-of-service procedures, power scans, cell reselections, neighbor cell system information reads, etc.

During the performance of the one or more tune away procedures, the tune away timer is monitored and it is determined whether or not the tune away timer has expired. For example, the communication manager 30 (Fig. 1) may be configured to execute any one or more of the various subcomponents, such as the tune away limiter, to monitor and determine whether the tune away timer has expired.

If the tune away timer has not expired, then the performance of the one or more additional tune away procedures is continued.

If the tune away timer is determined to have expired, then a task context, e.g. a state of the current additional tune away procedure, is saved at block 264. For example, the tune away limiter component 30 (Fig. 2) may be configured to execute the deferring component 58 to save the task context. The saved task context may then be referenced as a starting point for continuing the additional tune away procedure, e.g. upon occurrence of the next tune away mode. Subsequently, the RF communication resources and any other corresponding or related resources arc released at block 266 and the second subscription configuration is returned to a non-active state, such as a sleep state at block 268.

It should be noted that the use cases of Figs. 5 and 6 may be performed separately, or in combination. Also, it should be noted that these flowcharts are exemplary, and that other flows and other values/ranges may be utilized to implement the present apparatus and methods. Moreover, it should be noted that methods 220 and 250 may be carried out by execution of communications manager 30, or one or more components thereof, such as tune away component 36 and tune away limiter component 40 (Figs. 1, 2 & 3).

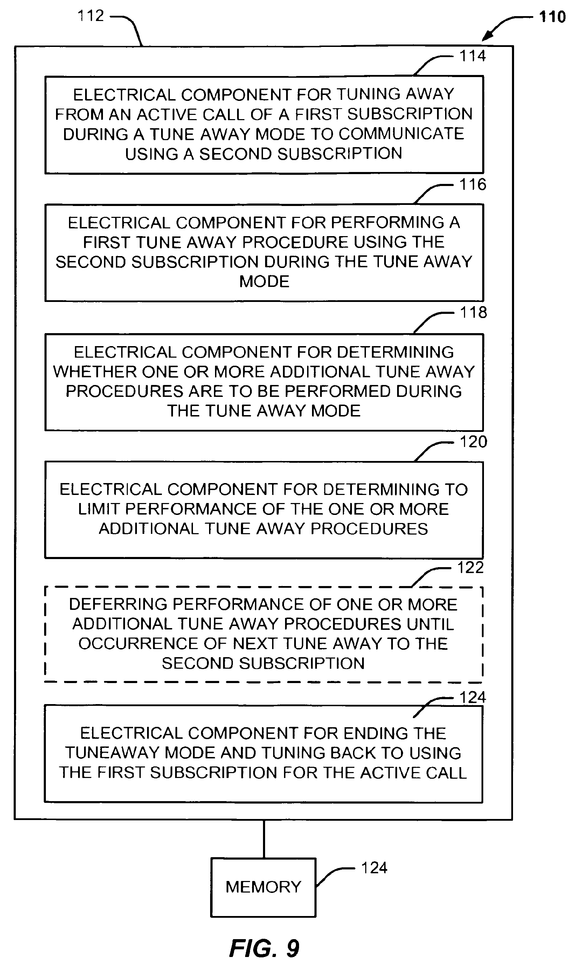

Referring to Fig. 9, an example system 110 is displayed for improved tune away in a UE. For example, system 110 can reside at least partially within a user equipment, such as UE 11 (Fig. 1). It is to be appreciated that system 110 is represented as including functional blocks, which can be functional blocks that represent functions implemented by a processor, software, or combination thereof (*e.g.*, firmware). System 110 includes a logical grouping 112 of electrical components that can act in conjunction. For instance, logical grouping 112 can include an electrical component 114 for tuning away from an active call of a first subscription during a tune away mode to communicate using a second subscription. In an aspect, electrical component 114 may include communications manager component 30 or a component thereof (Fig. 1). In addition, logical grouping 112 can include an electrical component 116 for performing a first tune away procedure using the second subscription during the tune away mode. In an aspect, electrical component 116 may include communications manager component 30 or a component thereof (Fig. 1). Furthermore, logical grouping 112 can include an electrical component 118 for determining whether one or more additional tune away procedures are to be performed during the tune away mode using the second subscription subsequent to the performing of the first tune away procedure. In an aspect, electrical component 118 may include communications manager component 30 or a component thereof (Fig. 1). Furthermore, logical grouping 112 can include an electrical component 120 for determining to limit performance of the one or more additional tune away procedures. In an aspect, electrical component 120 may include communications manager component 30 or a component thereof (Fig. 1). Additionally, logical grouping 112 may include an electrical component 122 for deferring performance of one or more additional tune away procedures until occurrence of a next tune away to the second subscription, based on a tune away periodicity of the tune away mode, in response to the determination to limit performance during the tune away mode. Furthermore, logical grouping 112 can include an electrical component 124 for ending the tune away mode and tuning back to using the first subscription for the active call based on the determination to limit the performance of the one or more additional tune away procedures. In an aspect, electrical component 124 may include communications manager component 30 or a component thereof (Fig. 1). In one example, electrical components 114, 116, 118, 120 and 122 can comprise at least one processor, or each electrical component 114, 116, 118, 120 and 122 can be a corresponding module of at least one processor. Moreover, in an additional or alternative example, electrical components 114, 116, 118, 120 and 122 can be a computer program product including a computer readable medium, where each electrical component 114, 116, 118, 120 and 122 can be corresponding code or instructions.

Additionally, system 110 can include a memory 124 that retains instructions for executing functions associated with the electrical components 114, 116, 118, 120 and 122, stores data used or obtained by the electrical components 114, 116, 118, 120 and 122, *etc.* While shown as being external to memory 124, it is to be understood that one or more of the electrical components 114, 116, 118, 120 and 122 can exist within memory 124.

Additional details of the described apparatus and methods are further described in the attached Appendix.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM , etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (*e.g.,* mobile-to-mobile) *ad hoc* network systems often using unpaired unlicensed spectrums, 802.xx wireless LAN, BLUETOOTH and any other short- or long- range, wireless communication techniques.

Various aspects or features are presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method of communicating with multiple subscriptions at a wireless device, comprising:
tuning away (202) from an active call of a first subscription during a tune away mode to communicate using a second subscription;
performing (204) a first tune away procedure using the second subscription during the tune away mode; **characterized by**:
determining (206) whether one or more additional tune away procedures are to be performed during the tune away mode, while the active call is maintained, using the second subscription subsequent to the performing of the first tune away procedure;
determining (208) to limit performance of the one or more additional tune away procedures; and
ending (212) the tune away mode and tuning back to using the first subscription for the active call based on the determination to limit the performance of the one or more additional tune away procedures.

2. The method of claim 1, further comprising:
starting a tune away timer in response to the determination to limit performance during the tune away mode; and
wherein ending the tune away mode and tuning back to using the first subscription is further in response to expiration of the tune away timer.

3. The method of claim 1, further comprising deferring performance of the one or more additional tune away procedures until occurrence of a next tuning away to the second subscription, based on a tune away periodicity of the tune away mode, in response to the determination to limit performance during the tune away mode.

4. The method of claim 3, wherein deferring performance during the tune away mode further comprises deferring one or more of a cell reselection procedure, a neighbor cell system information reading procedure, a registration procedure, a cell update procedure, a location update procedure, or a routing update procedure.

5. The method of claim 1, further comprising:
determining an out-of-service state during the tune away mode; and
performing an out-of-service ending the tune away mode and tuning back to the first subscription in response to the determined out-of-service state.

6. A computer program product for communicating with multiple subscriptions, comprising:
a computer-readable medium comprising:
at least one instruction for causing a computer to tune away (202) from an active call of a first subscription during a tune away mode to communicate using a second subscription;
at least one instruction for causing the computer to perform (204) a first tune away procedure using the second subscription during the tune away mode; **characterized by**:
at least one instruction for causing the computer to determine (206) whether one or more additional tune away procedures are to be performed during the tune away mode, while the active call is maintained, using the second subscription subsequent to the performing of the first tune away procedure;
at least one instruction for causing the computer to determine (208) to limit performance of the one or more additional tune away procedures; and
at least one instruction for causing the computer to end (212) the tune away mode and tune back to using the first subscription for the active call based on the determination to limit the performance of the one or more additional tune away procedures.

7. The computer program product of claim 6, further comprising at least one instruction for causing the computer to:
start a tune away timer in response to the determination to limit performance during the tune away mode; and
wherein ending the tune away mode and tuning back to using the first subscription is further in response to expiration of the tune away timer.

8. The computer program product of claim 6, further comprising at least one instruction for causing the computer to defer performance of the one or more additional tune away procedures until occurrence of a next tuning away to the second subscription, based on a tune away periodicity of the tune away mode, in response to the determination to limit performance during the tune away mode.

9. The computer program product of claim 8, wherein deferring performance during the tune away mode further comprises deferring one or more of a cell reselection procedure, a neighbor cell system information reading procedure, a registration procedure, a cell update procedure, a location update procedure, or a routing update procedure.

10. The computer program product of claim 6, further comprising at least one instruction for causing the computer to:
determine an out-of-service state during the tune away mode; and
perform an out-of-service ending the tune away mode and tuning back to the first subscription in response to the determined out-of-service state.

11. An apparatus (110) for communicating with multiple subscriptions, comprising:
means (114) for tuning away from an active call of a first subscription during a tune away mode to communicate using a second subscription;
means (116) for performing a first tune away procedure using the second subscription during the tune away mode; **characterized by**:
means (118) for determining whether one or more additional tune away procedures are to be performed during the tune away mode, while the active call is maintained, using the second subscription subsequent to the performing of the first tune away procedure;
means (120) for determining to limit performance of the one or more additional tune away procedures; and
means (124) for ending the tune away mode and tuning back to using the first subscription for the active call based on the determination to limit the performance of the one or more additional tune away procedures.

12. The apparatus of claim 11, further comprising at least one means for:
starting a tune away timer in response to the determination to limit performance during the tune away mode; and
wherein ending the tune away mode and tuning back to using the first subscription is further in response to expiration of the tune away timer.

13. The apparatus of claim 11, further comprising at least one means for deferring performance of the one or more additional tune away procedures until occurrence of a next tuning away to the second subscription, based on a tune away periodicity of the tune away mode, in response to the determination to limit performance during the tune away mode.

14. The apparatus of claim 13, wherein deferring performance during the tune away mode further comprises deferring one or more of a cell reselection procedure, a neighbor cell system information reading procedure, a registration procedure, a cell update procedure, a location update procedure, or a routing update procedure.

15. The apparatus of claim 11, further comprising at least one means for:
determining an out-of-service state during the tune away mode; and
performing an out-of-service ending the tune away mode and tuning back to the first subscription in response to the determined out-of-service state.

## Patentansprüche

1. Ein Verfahren zum Kommunizieren mit mehreren Teilnahmen bzw. Subskriptionen an einer Drahtloseinrichtung, das Folgendes aufweist:
Umstellen (202) von einem aktiven Anruf einer ersten Subskription während eines Umstellmodus, um unter Verwendung einer zweiten Subskription zu kommunizieren;
Durchführen (204) einer ersten Umstellprozedur unter Verwendung der zweiten Subskription während des Umstellmodus; **gekennzeichnet durch**:
Bestimmen (206), ob eine oder mehrere zusätzliche Umstellprozeduren während des Umstellmodus durchgeführt werden sollen, während der aktive Anruf beibehalten wird, und zwar unter Verwendung der zweiten Subskription nachfolgend auf das Durchführen der ersten Umstellprozedur;
Bestimmen (208), dass eine Durchführung der einen oder mehreren zusätzlichen Umstellprozeduren begrenzt werden soll; und
Beenden (212) des Umstellmodus und Zurückstellen auf eine Verwendung der ersten Subskription für den aktiven Anruf basierend auf der Bestimmung, die Durchführung der ein oder mehreren zusätzlichen Umstellprozeduren zu begrenzen.

2. Verfahren nach Anspruch 1, das weiter Folgendes aufweist:
Starten eines Umstelltimers ansprechend auf die Bestimmung, eine Durchführung während des Umstellmodus zu begrenzen; und
wobei das Beenden des Umstellmodus und das Zurückstellen auf eine Verwendung der ersten Subskription weiter ansprechend auf einen Ablauf des Umstelltimers stattfinden.

3. Verfahren nach Anspruch 1, das weiter Verschieben einer Durchführung der ein oder mehreren zusätzlichen Umstellprozeduren bis zum Auftreten eines nächsten Umstellens auf die zweite Subskription aufweist, basierend auf einer Umstellperiodizität des Umstellmodus, und zwar ansprechend auf die Bestimmung, die Durchführung während des Umstellmodus zu begrenzen.

4. Verfahren nach Anspruch 3, wobei das Verschieben der Durchführung während des Umstellmodus weiter Verschieben einer Zellenwieder- bzw. -neuauswahlprozedur und/oder einer Nachbarzellensysteminformationsleseprozedur und/oder einer Registrierungsprozedur und/oder einer Zellenaktualisierungsprozedur und/oder einer Standortaktualisierungsprozedur und/oder einer Weiterleitungsaktualisierungsprozedur aufweist.

5. Verfahren nach Anspruch 1, das weiter Folgendes aufweist:
Bestimmen eines Außer-Dienst-Zustandes während des Umstellmodus; und
Durchführen eines Außer-Dienst-Beendens des Umstellmodus und Zurückstellen auf die erste Subskription ansprechend auf den bestimmten Außer-Dienst-Zustand.

6. Ein Computerprogrammprodukt zum Kommunizieren mit mehreren Teilnahmen bzw. Subskriptionen, das Folgendes aufweist:
ein computerlesbares Medium, das Folgendes aufweist:
wenigstens einen Befehl bzw. eine Instruktion, um einen Computer zu veranlassen, von einem aktiven Anruf einer ersten Subskription während eines Umstellmodus umzustellen (202), um unter Verwendung einer zweiten Subskription zu kommunizieren;
wenigstens eine Instruktion, um den Computer zu veranlassen, eine erste Umstellprozedur unter Verwendung der zweiten Subskription während des Umstellmodus durchzuführen (204); **gekennzeichnet durch**:
wenigstens eine Instruktion, um einen Computer zu veranlassen, zu bestimmen (206), ob eine oder mehrere zusätzliche Umstellprozeduren während des Umstellmodus durchgeführt werden sollen, während der aktive Anruf beibehalten wird, und zwar unter Verwendung der zweiten Subskription nachfolgend auf das Durchführen der ersten Umstellprozedur;
wenigstens eine Instruktion, um den Computer zu veranlassen zu bestimmen (208), dass die Durchführung der ein oder mehreren zusätzlichen Umstellprozeduren begrenzt wird; und
wenigstens eine Instruktion, um den Computer zu veranlassen, den Umstellmodus zu beenden (212) und zurückzustellen auf die Verwendung der ersten Subskription für den aktiven Anruf basierend auf der Bestimmung, die Durchführung der ein oder mehreren zusätzlichen Umstellprozeduren zu begrenzen.

7. Computerprogrammprodukt nach Anspruch 6, das weiter wenigstens eine Instruktion aufweist, um den Computer zu veranlassen zum:
Starten eines Umstelltimers ansprechend auf die Bestimmung, die Durchführung während des Umstellmodus zu begrenzen; und
wobei das Beenden des Umstellmodus und das Zurückstellen auf eine Verwendung der ersten Subskription weiter ansprechend auf einen Ablauf des Umstelltimers stattfindet.

8. Computerprogrammprodukt nach Anspruch 6, das weiter wenigstens eine Instruktion aufweist, um den Computer zu veranlassen, die Durchführung der ein oder mehreren zusätzlichen Umstellprozeduren zu verschieben bis zum Auftreten eines nächsten Umstellens auf die zweite Subskription, basierend auf einer Umstellperiodizität des Umstellmodus, und zwar ansprechend auf die Bestimmung, die Durchführung während des Umstellmodus zu begrenzen.

9. Computerprogrammprodukt nach Anspruch 8, wobei das Verschieben einer Durchführung während des Umstellmodus weiter Verschieben einer Zellenwieder- bzw. -neuauswahlprozedur und/oder einer Nachbarzellsysteminformationsleseprozedur und/oder einer Registrierungsprozedur und/oder einer Zellenaktualisierungsprozedur und/oder einer Standortaktualisierungsprozedur und/oder einer Weiterleitungsaktualisierungsprozedur aufweist.

10. Computerprogrammprodukt nach Anspruch 6, das weiter wenigstens einen Befehl bzw. eine Instruktion aufweist, um den Computer zu veranlassen zum:
Bestimmen eines Außer-Dienst-Zustandes während des Umstellmodus; und
Durchführen eines Außer-Dienst-Beendens des Umstellmodus und Zurückstellen auf die erste Subskription ansprechend auf den bestimmten Außer-Dienst-Zustand.

11. Eine Vorrichtung (110) zum Kommunizieren mit mehreren Teilnahmen bzw. Subskriptionen, die Folgendes aufweist:
Mittel (114) zum Umstellen von einem aktiven Anruf einer ersten Subskription während eines Umstellmodus, um unter Verwendung einer zweiten Subskription zu kommunizieren;
Mittel (116) zum Durchführen einer ersten Umstellprozedur unter Verwendung der zweiten Subskription während des Umstellmodus; **gekennzeichnet durch**:
Mittel (118) zum Bestimmen, ob eine oder mehrere zusätzliche Umstellprozeduren während des Umstellmodus durchgeführt werden sollen, während der aktive Anruf beibehalten wird, und zwar unter Verwendung der zweiten Subskription nachfolgend auf das Durchführen der ersten Umstellprozedur;
Mittel (120) zum Bestimmen, dass eine Durchführung der einen oder mehreren zusätzlichen Umstellprozeduren begrenzt werden soll; und
Mittel (124) zum Beenden des Umstellmodus und zum Zurückstellen auf eine Verwendung der ersten Subskription für den aktiven Anruf basierend auf der Bestimmung, die Durchführung der ein oder mehreren zusätzlichen Umstellprozeduren zu begrenzen.

12. Vorrichtung nach Anspruch 11, die weiter wenigsten ein Mittel aufweist zum:
Starten eines Umstelltimers ansprechend auf die Bestimmung, eine Durchführung während des Umstellmodus zu begrenzen; und
wobei das Beenden des Umstellmodus und das Zurückstellen unter Verwendung der ersten Subskription weiter ansprechend auf einen Ablauf des Umstelltimers stattfinden.

13. Vorrichtung nach Anspruch 11, die weiter wenigstens ein Mittel aufweist zum Verschieben einer Durchführung der ein oder mehreren zusätzlichen Umstellprozeduren bis zum Auftreten eines nächsten Umstellens auf die zweite Subskription, basierend auf einer Umstellperiodizität des Umstellmodus, und zwar ansprechend auf die Bestimmung, die Durchführung während des Umstellmodus zu begrenzen.

14. Vorrichtung nach Anspruch 13, wobei das Verschieben der Durchführung während des Umstellmodus weiter Verschieben einer Zellenwieder- bzw.-neuauswahlprozedur und/oder einer Nachbarzellsysteminformationsleseprozedur und/oder einer Registrierungsprozedur und/oder einer Zellenaktualisierungsprozedur und/oder einer Standortaktualisierungsprozedur und/oder einer Weiterleitungsaktualisierungsprozedur aufweist.

15. Vorrichtung nach Anspruch 11, die weiter wenigstens ein Mittel aufweist zum:
Bestimmen eines Außer-Dienst-Zustandes während des Umstellmodus; und
Durchführen eines Außer-Dienst-Beendens des Umstellmodus und Zurückstellen auf die erste Subskription ansprechend auf den bestimmten Außer-Dienst-Zustand.

## Revendications

1. Un procédé de communication avec une pluralité d'abonnements au niveau d'un dispositif sans fil, comprenant :
le changement d'accord (202) à partir d'un appel actif d'un premier abonnement au cours d'un mode de changement d'accord de façon à communiquer au moyen d'un deuxième abonnement,
l'exécution (204) d'une première procédure de changement d'accord au moyen du deuxième abonnement au cours du mode de changement d'accord, **caractérisé par** :
la détermination (206) si une ou plusieurs procédures de changement d'accord additionnelles doivent être exécutées au cours du mode de changement d'accord, pendant que l'appel actif est maintenu, au moyen du deuxième abonnement suite à l'exécution de la première procédure de changement d'accord,
la détermination (208) de limiter l'exécution des une ou plusieurs procédures de changement d'accord additionnelles, et
la suspension (212) du mode de changement d'accord et le retour à l'utilisation du premier abonnement pour l'appel actif en fonction de la détermination de limiter l'exécution des une ou plusieurs procédures de changement d'accord additionnelles.

2. Le procédé selon la Revendication 1, comprenant en outre :
le démarrage d'une horloge de changement d'accord en réponse à la détermination de limiter une exécution au cours du mode de changement d'accord, et
où la suspension du mode de changement d'accord et le retour à l'utilisation du premier abonnement est en outre en réponse à l'expiration de l'horloge de changement d'accord.

3. Le procédé selon la Revendication 1, comprenant en outre le report de l'exécution des une ou plusieurs procédures de changement d'accord additionnelles jusqu'à l'occurrence d'un changement d'accord suivant vers le deuxième abonnement, en fonction d'une périodicité de changement d'accord du mode de changement d'accord, en réponse à la détermination de limiter une exécution au cours du mode de changement d'accord.

4. Le procédé selon la Revendication 3, où le report d'exécution au cours du mode de changement d'accord comprend en outre le report d'un ou de plusieurs éléments parmi une procédure de resélection de cellule, une procédure de lecture d'informations système de cellule voisine, une procédure d'enregistrement, une procédure d'actualisation de cellule, une procédure d'actualisation d'emplacement ou une procédure d'actualisation d'acheminement.

5. Le procédé selon la Revendication 1, comprenant en outre :
la détermination d'un état hors service au cours du mode de changement d'accord, et
l'exécution d'une mise hors service qui suspend le mode de changement d'accord et réalise un retour vers le premier abonnement en réponse à l'état hors service déterminé.

6. Un produit de programme informatique destiné à une communication avec une pluralité d'abonnements, comprenant :
un support lisible par ordinateur comprenant :
au moins une instruction destinée à amener un ordinateur à effectuer un changement d'accord (202) à partir d'un appel actif d'un premier abonnement au cours d'un mode de changement d'accord de façon à communiquer au moyen d'un deuxième abonnement,
au moins une instruction destinée à amener l'ordinateur à exécuter (204) une première procédure de changement d'accord au moyen du deuxième abonnement au cours du mode de changement d'accord, **caractérisé par** :
au moins une instruction destinée à amener l'ordinateur à déterminer (206) si une ou plusieurs procédures de changement d'accord additionnelles doivent être exécutées au cours du mode de changement d'accord pendant que l'appel actif est maintenu, au moyen du deuxième abonnement suite à l'exécution de la première procédure de changement d'accord,
au moins une instruction destinée à amener l'ordinateur à déterminer (208) de limiter l'exécution des une ou plusieurs procédures de changement d'accord additionnelles, et
au moins une instruction destinée à amener l'ordinateur à suspendre (212) le mode de changement d'accord et à revenir à l'utilisation du premier abonnement pour l'appel actif en fonction de la détermination de limiter l'exécution des une ou plusieurs procédures de changement d'accord additionnelles.

7. Le produit de programme informatique selon la Revendication 6, comprenant en outre au moins une instruction destinée à amener l'ordinateur à :
mettre en route une horloge de changement d'accord en réponse à la détermination de limiter une exécution au cours du mode de changement d'accord, et
où la suspension du mode de changement d'accord et le retour à l'utilisation du premier abonnement sont en outre en réponse à l'expiration de l'horloge de changement d'accord.

8. Le produit de programme informatique selon la Revendication 6, comprenant en outre au moins une instruction destinée à amener l'ordinateur à reporter l'exécution des une ou plusieurs procédures de changement d'accord additionnelles jusqu'à l'occurrence d'un changement d'accord suivant vers le deuxième abonnement en fonction d'une périodicité de changement d'accord du mode de changement d'accord en réponse à la détermination de limiter une exécution au cours du mode de changement d'accord.

9. Le produit de programme informatique selon la Revendication 8, où le report d'exécution au cours du mode de changement d'accord comprend en outre le report d'un ou de plusieurs éléments parmi une procédure de resélection de cellule, une procédure de lecture d'informations système de cellule voisine, une procédure d'enregistrement, une procédure d'actualisation de cellule, une procédure d'actualisation d'emplacement ou une procédure d'actualisation d'acheminement.

10. Le produit de programme informatique selon la Revendication 6, comprenant en outre au moins une instruction destinée à amener l'ordinateur à :
déterminer un état hors service au cours du mode de changement d'accord, et
exécuter une mise hors service qui suspend le mode de changement d'accord et réalise un retour vers le premier abonnement en réponse à l'état hors service déterminé.

11. Un appareil (110) de communication avec une pluralité d'abonnements, comprenant :
un moyen (114) de changement d'accord à partir d'un appel actif d'un premier abonnement au cours d'un mode de changement d'accord de façon à communiquer au moyen d'un deuxième abonnement,
un moyen (116) d'exécution d'une première procédure de changement d'accord au moyen du deuxième abonnement au cours du mode de changement d'accord, **caractérisé par** :
un moyen (118) de détermination si une ou plusieurs procédures de changement d'accord additionnelles doivent être exécutées au cours du mode de changement d'accord pendant que l'appel actif est maintenu au moyen du deuxième abonnement suite à l'exécution de la première procédure de changement d'accord,
un moyen (120) de détermination de limiter l'exécution des une ou plusieurs procédures de changement d'accord additionnelles, et
un moyen (124) de suspension du mode de changement d'accord et de retour à l'utilisation du premier abonnement pour l'appel actif en fonction de la détermination de limiter l'exécution des une ou plusieurs procédures de changement d'accord additionnelles.

12. L'appareil selon la Revendication 11, comprenant en outre au moins un moyen destiné au :
démarrage d'une horloge de changement d'accord en réponse à la détermination de limiter une exécution au cours du mode de changement d'accord, et
où la suspension du mode de changement d'accord et le retour à l'utilisation du premier abonnement sont en outre en réponse à l'expiration de l'horloge de changement d'accord.

13. L'appareil selon la Revendication 11, comprenant en outre au moins un moyen de report de l'exécution des une ou plusieurs procédures de changement d'accord additionnelles jusqu'à l'occurrence d'un changement d'accord suivant vers le deuxième abonnement, en fonction d'une périodicité de changement d'accord du mode de changement d'accord, en réponse à la détermination de limiter une exécution au cours du mode de changement d'accord.

14. L'appareil selon la Revendication 13, où le report d'exécution au cours du mode de changement d'accord comprend en outre le report d'un ou de plusieurs éléments parmi une procédure de resélection de cellule, une procédure de lecture d'informations système de cellule voisine, une procédure d'enregistrement, une procédure d'actualisation de cellule, une procédure d'actualisation d'emplacement ou une procédure d'actualisation d'acheminement.

15. L'appareil selon la Revendication 11, comprenant en outre au moins un moyen destiné à :
la détermination d'un état hors service au cours du mode de changement d'accord, et
l'exécution d'une mise hors service qui suspend le mode de changement d'accord et réalise un retour vers le premier abonnement en réponse à l'état hors service déterminé.
